# FASCICULE DE BREVET EUROPEEN

(11) **EP 2 654 952 B1**
(45) Date de publication et mention de la délivrance du brevet: **20.02.2019**
(21) Numéro de dépôt: 11808896.2
(22) Date de dépôt: 15.12.2011
(51) Int. Cl.: B01J 27/18, C10G 45/04

(54) **PROCEDE D'HYDRODESULFURATION DE COUPES ESSENCES UTILISANT UN CATALYSEUR A BASE D'HETEROPOLYANIONS PIEGES DANS UN SUPPORT SILICIQUE MESOSTRUCTURE**
HYDROENTSCHWEFELUNG VON BENZIN UNTER VERWENDUNG HETEROPOLYANIONISCHEM KATALYSATOR INNERHALB EINES PORÖSEN SILICISCHEN MESOSTRUKTURIERTEN TRÄGER
HYDRODESULFURISATION OF GASOLINE CUTS USING A HETEROPOLYANIONIC CATALYST PLACED INSIDE A MESOSTRUCTURED SILICIC SUPPORT

(30) Priorité: 22.12.2010 FR 1005032
(43) Date de publication de la demande: 30.10.2013
(73) Titulaire: IFP Energies nouvelles, 92500 Rueil-Malmaison (FR); Centre National de la Recherche Scientifique, 75794 Paris Cedex 16 (FR)
(72) Inventeur: MARCHAND, Karin, F-68008 Lyon (FR); DEVERS, Elodie, F-69007 Lyon (FR); CHAUMONNOT, Alexandra, F-69008 Lyon (FR); BONDUELLE, Audrey, F-69340 Francheville (FR); DUFAUD, Véronique, F-69100 Villeurbanne (FR); LEFEBVRE, Frédéric, F-38270 Beaufort (FR); BADER, Manuela, F-35200 Rennes (FR); LOPES SILVA, Susana, F-69007 Lyon (FR)
(74) Mandataire: IFP Energies nouvelles
(86) Numéro de dépôt international: PCT/FR2011/000656
(87) Numéro de publication internationale: WO 2012/085357

(56) Documents cités:
- EP-A1- 1 733 787
- US-A1- 2004 186 013
- ALAIN RIVES ET AL.: "SILICA AND ALUMINA IMPREGNATED WITH DIMETHYLFORMAMIDE SOLUTIONS OF MOLYBDOPHOSPHORIC ACIDS FOR HYDROTREATMENT REACTIONS", CATALYSIS LETTERS, vol. 71, no. 3-4, 12 juin 2000 (2000-06-12), pages 193-201, XP002638514,
- XUE MIN YAN ET AL.: "SYNTHESIS AND CATALYTIC PROPERTIES OF MESOPOROUS PHOSPHOTUNGSTIC ACID/SIO2 IN A SELF-GENERATED ACIDIC ENVIRONMENT BY EVAPORATION INDUCED SELF ASSEMBLY", MATERIALS RESEARCH BULLETIN, vol. 42, 27 décembre 2006 (2006-12-27), pages 1905-1913, XP002638408,
- CAROLE LEMONIER ET AL.: "MOLYBDOCOBALTATE COBALT SALTS: NEW STARTING MATERIALS FOR HYDROTREATING CATALYSTS", APPLIED CATALYSIS B: ENVIRONMENTAL, vol. 70, 23 juin 2006 (2006-06-23), pages 548-556, XP002638364,
- XUE MIN YAN ET AL.: "OXIDATIVE DESULFURIZATION OF DIESEL OIL USING MESOPOROUS PHOSPHOTUNGSTIC ACID /SIO2 CATALYST", JOURNAL OF CHINESE CHEMICAL SOCIETY, vol. 54, 31 décembre 2007 (2007-12-31), pages 911-916, XP002638409,
- XUE MIN YAN ET AL.: "SYNTHESIS AND CHARACTERIZATION OF MESOPOROUS PHOSPHOTUNGSTIC ACID/TIO2 NANOCOMPOSITE AS A NOVEL OXIDATIVE DESULFURIZATION CATALYST", JOURNAL OF MOLECULAR CATALYSIS A: CHEMICAL, vol. 304, 21 janvier 2009 (2009-01-21), pages 52-57, XP002638410,
- CATHERINE MARTIN: "CATALYSEURS D'HYDRODESULFURATION PREPARES A PARTIR D'HETEROPOLYANIONS DE TYPE ANDERSON", UNIVERSITE DES SCIENCES ET TECHNOLOGIE DE LILLE , 21 octobre 2003 (2003-10-21), XP002638548, Extrait de l'Internet: URL:https://iris.univ-lille1.fr/dspace/bit stream/1908/354/2/50376-2003-111-112.pdf [extrait le 2011-05-24]

## Description

La présente invention se rapporte au domaine des hydrotraitements (HDT) de charges hydrocarbonées, lesdites charges hydrocarbonées étant de préférence des charges de type essences de craquage catalytique.

Elle a principalement pour objet l'utilisation d'un catalyseur dans un procédé permettant l'hydrodésulfuration (HDS) de charges hydrocarbonées, lesdites charges hydrocarbonées étant de préférence des charges de type essences de craquage catalytique.

### État de la technique antérieure

Les charges hydrocarbonées de type essences et plus particulièrement les essences issues du craquage catalytique (FCC) contiennent environ 20 à 40% de composés oléfiniques, 30 à 60% d'aromatiques et 20 à 50% de composés saturés de type paraffines ou naphtènes. Parmi les composés oléfiniques, les oléfines ramifiées sont majoritaires par rapport aux oléfines linéaires et cycliques. Ces essences contiennent également des traces de composés hautement insaturés de type dioléfiniques qui sont susceptibles de désactiver les catalyseurs par formation de gommes. La teneur en composés soufrés de ces essences est très variable en fonction du type d'essence (vapocraqueur, craquage catalytique, cokéfaction, etc.) ou, dans le cas du craquage catalytique, de la sévérité appliquée au procédé. Elle peut fluctuer entre 200 et 5000 ppm de soufre, de préférence entre 500 et 2000 ppm de soufre par rapport à la masse de la charge. Les familles des composés thiophéniques et benzothiophéniques sont majoritaires, les mercaptans n'étant présents qu'à des niveaux très faibles généralement compris entre 10 et 100 ppm. Les essences de FCC contiennent également des composés azotés dans des proportions n'excédant généralement pas 100 ppm. La production d'essences reformulées répondant aux nouvelles normes d'environnement nécessite notamment que l'on diminue le moins possible leur concentration en oléfines afin de conserver un indice d'octane élevé, mais que l'on diminue de façon importante leur teneur en soufre. Ainsi, les normes environnementales en vigueur et futures contraignent les raffineurs à diminuer la teneur en soufre dans les essences à des valeurs inférieures à 10 ppm depuis 2009. Ces normes concernent non seulement la teneur totale en soufre mais également la nature des composés soufrés tels que les mercaptans. Les essences de craquage catalytique, qui peuvent représenter 30 à 50% du pool essence, présentent des teneurs en oléfines et en soufre élevées. Le soufre présent dans les essences reformulées est imputable, à près de 90%, à l'essence de FCC. La désulfuration (l'hydrodésulfuration) des essences et principalement des essences de FCC est donc d'une importance évidente pour le respect des spécifications. L'hydrotraitement et en particulier l'hydrodésulfuration des essences de craquage catalytique, lorsqu'il est réalisé dans des conditions classiques connues de l'Homme du métier permet de réduire la teneur en soufre de la coupe. Cependant, ce procédé présente l'inconvénient majeur d'entraîner une chute très importante de l'indice d'octane de la coupe, en raison de la saturation des oléfines par hydrogénation desdites oléfines au cours de l'hydrotraitement. Il a donc été proposé des procédés permettant de désulfurer profondément les essences de FCC tout en maintenant l'indice d'octane à un niveau élevé, c'est à dire en maintenant une bonne sélectivité pour la réaction d'hydrodésulfuration par rapport à la réaction d'hydrogénation des oléfines (le ratio entre hydrodésulfuration et hydrogénation des oléfines doit donc être le plus élevé possible). Pour exemple, le brevet US5318690 propose un procédé consistant à fractionner l'essence, adoucir la fraction légère et à hydrotraiter la fraction lourde sur un catalyseur conventionnel puis à la traiter sur une zéolithe ZSM-5 pour retrouver approximativement l'indice d'octane initial.

L'obtention d'une bonne sélectivité pour la réaction d'hydrodésulfuration par rapport à la réaction d'hydrogénation des oléfines (ratio entre hydrodésulfuration et hydrogénation des oléfines) peut donc être en partie obtenue grâce au choix du procédé mais dans tous les cas l'utilisation d'un système catalytique intrinsèquement sélectif est très souvent un facteur clé.

Il existe différentes façons d'améliorer la sélectivité des catalyseurs en faveur de la réaction d'hydrodésulfuration des essences. Une voie permettant d'améliorer la sélectivité intrinsèque des catalyseurs est de tirer bénéfice de la présence de dépôts carbonés à la surface du catalyseur. Ainsi, le brevet US4149965 propose de prétraiter un catalyseur conventionnel d'hydrotraitement de naphta pour le désactiver partiellement avant son utilisation pour l'hydrotraitement des essences. De même, la demande de brevet EP0745660A1 indique que le prétraitement d'un catalyseur afin de déposer entre 3 et 10% poids de coke améliore les performances catalytiques. Dans ce cas, il est précisé que le ratio C/H ne doit pas être supérieur à 0,7. Afin d'améliorer la sélectivité, il est également possible d'optimiser la densité d'oxyde d'élément du groupe VIB par mètre carré de support. Ainsi le brevet US7223333 préconise des valeurs de densité surfacique comprises entre 4.10⁻⁴ et 36.10⁻⁴ g d'oxyde d'élément du groupe VIB par m² de support.

Cependant, de nouvelles techniques de préparation des catalyseurs ont besoin d'être développées pour améliorer encore les performances de ces catalyseurs et satisfaire les législations à venir.

De façon générale, un catalyseur d'hydrotraitement présentant un fort potentiel catalytique se caractérise par une phase active optimisée, c'est à dire par une teneur en métal élevée et parfaitement dispersée à la surface du support. Notons également que, idéalement, quelle que soit la nature de la charge hydrocarbonée à traiter, le catalyseur doit pouvoir présenter une accessibilité des sites actifs vis-à-vis des réactifs et produits de réactions tout en développant une surface active élevée, ce qui conduit à des contraintes spécifiques en terme de structure et de texture propres au support oxyde constitutif desdits catalyseurs.

La composition et l'utilisation de catalyseurs classiques d'hydrotraitement de charges hydrocarbonées sont bien décrits dans l'ouvrage "Hydrocracking Science and Technology", 1996, J. Scherzer, A. J. Gruia, Marcel Dekker Inc et dans l'article de B. S. Clausen, H. T. Topsøe, F. E. Massoth, issu de l'ouvrage "Catalysis Science and Technology", 1996, volume 11, Springer-Verlag. Ainsi, ces catalyseurs se caractérisent généralement par la présence d'une phase active à base d'au moins un métal du groupe VIB et/ou au moins un métal du groupe VIII du tableau périodique des éléments. Les formulations les plus courantes sont de type cobalt-molybdène (CoMo), nickel-molybdène (NiMo) et nickel-tungstène (NiW). Ces catalyseurs peuvent se présenter sous forme massique ou bien à l'état supporté mettant alors en jeu un solide poreux de nature différente. Dans ce dernier cas, le support poreux est généralement un oxyde amorphe ou mal cristallisé tel que par exemple une alumine, ou un aluminosilicate, éventuellement associé à un matériau zéolithique ou non. Après préparation, au moins un métal du groupe VIB et/ou au moins un métal du groupe VIII constitutif(s) desdits catalyseurs se présente(nt) souvent sous forme d'oxyde. La forme active et stable desdits catalyseurs pour les procédés d'hydrotraitement étant la forme sulfurée, ces catalyseurs doivent subir une étape de sulfuration. Celle-ci peut être réalisée dans l'unité du procédé associé, on parle alors de sulfuration in-situ ou préalablement au chargement du catalyseur dans l'unité, on parle alors de sulfuration ex-situ.

Les méthodes usuelles conduisant à la formation de la phase active des catalyseurs d'hydrotraitement consistent en un dépôt de précurseur(s) moléculaire(s) d'au moins un métal du groupe VIB et/ou au moins un métal du groupe VIII sur un support oxyde par la technique dite "d'imprégnation à sec" suivi des étapes de maturation, séchage et calcination conduisant à la formation de la forme oxydée du(des)dit(s) métal(aux) employé(s). Vient ensuite l'étape finale de sulfuration génératrice de la phase active comme mentionné ci-dessus.

Les performances catalytiques de catalyseurs d'hydrotraitement issus de ces protocoles de synthèse "conventionnels" ont largement été étudiées. En particulier, il a été montré que, pour des teneurs en métal relativement élevées, des phases réfractaires à la sulfuration, formées consécutivement à l'étape de calcination et dues à un phénomène de frittage apparaissent (B. S. Clausen, H. T. Topsøe, et F. E. Massoth, issu de l'ouvrage "Catalysis Science and Technology", 1996, volume 11, Springer-Verlag). Par exemple, dans le cas des catalyseurs de type CoMo ou NiMo supportés sur un support de nature aluminique, ces phases réfractaires à la sulfuration sont soit des cristallites d'oxydes métalliques de formule MoO₃, NiO, CoO, CoMoO₄ ou Co₃O₄, de taille suffisante pour être détectés en DRX, soit des espèces du type Al₂(MoO₄)₃, CoAl₂O₄ ou NiAl₂O₄ soit les deux. Les trois espèces du type Al₂(MoO₄)₃, CoAl₂O₄ ou NiAl₂O₄ contenant l'élément aluminium sont bien connues de l'Homme du métier. Elles résultent de l'interaction entre le support aluminique et les sels précurseurs en solution de la phase active, ce qui se traduit concrètement par une réaction entre des ions Al³⁺ extraits de la matrice aluminique et lesdits sels pour former des hétéropolyanions d'Anderson de formule [Al(OH)₆Mo₆O₁₈]³⁻, eux-mêmes précurseurs des phases réfractaires à la sulfuration. La présence de l'ensemble de ces espèces conduit à une perte indirecte non négligeable de l'activité catalytique du catalyseur d'hydrotraitement associé car la totalité des éléments appartenant au moins à un métal du groupe VIB et/ou au moins un métal du groupe VIII n'est pas utilisée au maximum de son potentiel puisque une partie de ceux-ci est immobilisée dans des espèces peu ou non actives.

Les performances catalytiques des catalyseurs d'hydrotraitement conventionnels décrits ci-dessus pourraient donc être améliorées, notamment en développant de nouvelles méthodes de préparation de ces catalyseurs qui permettraient :
1) d'assurer une bonne dispersion de la phase active, en particulier pour des teneurs en métal élevées par exemple par le contrôle de la taille des particules à base de métaux de transition et le maintien des propriétés de ces particules après traitement thermique,
2) de limiter la formation des espèces réfractaires à la sulfuration par exemple par l'obtention d'une meilleure synergie entre les métaux de transition constitutifs de la phase active et le contrôle des interactions entre la phase active, et/ou ses précurseurs et le support poreux employé,
3) d'assurer une bonne diffusion des réactifs et des produits de réaction tout en maintenant des surfaces actives développées élevées par exemple par l'optimisation des propriétés chimiques, texturales et structurales du support poreux.

Plusieurs voies de recherches concernant le développement de nouveaux catalyseurs d'hydrotraitement ont tenté de répondre aux besoins exprimés ci-dessus.

Les travaux de recherche de la demanderesse l'ont donc conduit à préparer des catalyseurs d'hydrotraitement en modifiant la composition chimique et structurale des espèces métalliques précurseurs des phases actives et ainsi en modifiant les interactions entre le support et la phase active du catalyseur et/ou ses précurseurs oxydes. En particulier, les travaux de la demanderesse l'ont conduit à utiliser des polyoxométallates dont la formule est explicitée ci-dessous comme précurseurs oxydes particuliers de la phase active des catalyseurs mis en oeuvre dans le procédé d'hydrodésulfuratuion des essences selon l'invention.

Par ailleurs, le support oxyde du catalyseur jouant un rôle non négligeable dans le développement de catalyseurs d'hydrotraitement performants dans la mesure où il va induire des modifications des interactions entre le support et le phase active dudit catalyseur et/ou ses précurseurs oxydes, la demanderesse a également dirigé ses travaux de recherche vers la préparation de catalyseurs d'hydrotraitement utilisant des supports oxydes présentant des propriétés texturales particulières.

La demanderesse a donc mis en évidence qu'un catalyseur comprenant, sous sa forme oxyde, au moins un précurseur de phase active sous forme d'au moins un polyoxométallate choisi parmi les hétéropolyanions de Keggin de formule PCoMo₁₁O₄₀⁶⁻ et PMo₁₂O₄₀³⁻, piégé au sein même d'une matrice oxyde mésostructurée silicique appartenant à la famille de matériaux dénommé SBA, présentait une activité catalytique améliorée par rapport à des catalyseurs préparés à partir de précurseurs standard ne contenant pas ces polyoxométallates piégés dans ladite matrice, ledit catalyseur étant sulfuré puis mis en oeuvre dans un procédé d'hydrodésulfuration d'au moins une coupe essence, et de préférence d'essence de craquage catalytique.

Un objectif de la présente invention est de fournir un procédé d'hydrodésulfuration d'une coupe essence et de préférence d'une coupe essence issue du craquage catalytique, mettant en oeuvre un catalyseur présentant des performances catalytiques améliorées en hydrodésulfuration.

Un autre objectif de la présente invention est de fournir un procédé d'hydrodésulfuration d'une coupe essence et de préférence d'une coupe essence issue du craquage catalytique mettant en oeuvre un catalyseur présentant des performances catalytiques améliorées, ledit procédé permettant de minimiser les pertes en coupe essence et maintenir l'indice d'octane de ladite coupe élevée en contrôlant la saturation des oléfines par hydrogénation au cours de l'hydrodésulfuration.

### Résumé de l'invention

L'invention concerne un Procédé d'hydrodésulfuration d'au moins une coupe essence mettant en oeuvre un catalyseur comprenant, sous sa forme oxyde,
- une teneur massique de l'élément du groupe VIB exprimée en pourcentage poids d'oxyde par rapport à la masse totale du catalyseur étant comprise entre 1 et 25% poids présent sous forme d'au moins un polyoxométallate choisi parmi les hétéropolyanions de Keggin de formule PCoMo₁₁O₄₀⁶⁻ et PMo₁₂O₄₀³⁻, lesdits polyoxométallates étant piégés dans les parois d'une matrice oxyde silicique mésostructurée appartenant à la famille de matériaux dénommé SBA ayant une taille de pore comprise entre 4 et 50 nm et présentant des parois amorphes d'épaisseur comprise entre 3 et 7 nm, et
- au moins un métal du groupe VIII dont la teneur massique dudit l'élément du groupe VIII exprimée en pourcentage poids d'oxyde par rapport à la masse totale du catalyseur étant comprise entre 0,1 et 10% poids,
- ledit catalyseur étant sulfuré avant d'être mis en oeuvre dans ledit procédé, ledit procédé est mis en oeuvre à une température comprise entre 250°C et 380°C, à une pression totale comprise entre 1 MPa et 3 MPa avec un ratio volume d'hydrogène par volume de charge hydrocarbonée compris entre 100 et 600 litres par litre et à une Vitesse Volumique Horaire (VVH) définie par le rapport du débit volumique de charge hydrocarbonée liquide par le volume de catalyseur chargé dans le réacteur comprise entre 1 et 10 h⁻¹.

### Intérêt de l'invention

Un des avantages de la présente invention réside dans la mise en oeuvre, dans un procédé d'hydrodésulfuration d'au moins une charge hydrocarbonée, d'un catalyseur présentant simultanément les propriétés catalytiques propres à la présence de polyoxométallates et les propriétés de réactivité de surface de la matrice oxyde mésostructurée silicique dans laquelle sont piégés lesdits polyoxométallates. Il en résulte des propriétés et des interactions innovantes entre lesdits polyoxométallates et le réseau inorganique mésostructuré silicique de ladite matrice. Ces interactions se traduisent par une amélioration significative de l'activité en hydrodésulfuration par rapport aux catalyseurs décrits dans l'art antérieur, ceci étant dû en particulier à une meilleure dispersion de la phase active grâce à l'utilisation d'une matrice oxyde silicique dans laquelle sont piégés des polyoxométallates. Ces interactions se traduisent également par une amélioration significative de la sélectivité desdits catalyseurs pour la réaction d'hydrodésulfuration par rapport à la réaction d'hydrogénation des oléfines par rapport aux catalyseurs décrits dans l'art antérieur.

### Exposé de l'invention

L'invention concerne un procédé d'hydrodésulfuration de coupes essences, et en particulier de coupes essences issues du craquage catalytique.

### Charges

Conformément à l'invention, la charge hydrocarbonée mise en oeuvre dans le procédé d'hydrodésulfuration selon l'invention est une coupe essence contenant du soufre. Une coupe essence traitée dans le procédé d'hydrodésulfuration selon l'invention est de préférence une coupe essence présentant un point d'ébullition final inférieur ou égal à 250°C. Une telle coupe essence peut avantageusement être issue d'une unité de cokéfaction (coking selon la terminologie anglo-saxonne), de viscoréduction (visbreaking selon la terminologie anglo-saxonne), de vapocraquage (steam cracking selon la terminologie anglo-saxonne) ou de craquage catalytique (Fluid Catalytic Cracking selon la terminologie anglo-saxonne). De préférence, la coupe essence traitée dans le procédé d'hydrodésulfuration selon l'invention est une coupe essence issue d'une unité de craquage catalytique.

Une coupe essence issue d'une unité de craquage catalytique présente avantageusement une gamme de points d'ébullition qui s'étend avantageusement des points d'ébullition des hydrocarbures à 5 atomes de carbone jusqu'à un point d'ébullition final inférieur ou égal à 250°C. Ladite coupe essence issue d'une unité de craquage catalytique peut éventuellement être composée d'une fraction significative d'au moins une coupe essence provenant d'autres procédés de production telle que par exemple un coupe essence issue de la distillation atmosphérique, une coupe essence issue d'une distillation directe (ou essence straight run selon la terminologie anglo-saxonne) ou d'une coupe essence issue de procédés de conversion (essence de cokéfaction ou de vapocraquage).

Les coupes essences mises en oeuvre dans le procédé d'hydrodésulfuration selon l'invention et plus particulièrement les coupes essences issues du craquage catalytique (FCC) contiennent avantageusement 20 à 40% de composés oléfiniques, 30 à 60% d'aromatiques et 20 à 50% de composés saturés de type paraffines ou naphtènes. Parmi les composés oléfiniques, les oléfines ramifiées sont majoritaires par rapport aux oléfines linéaires et cycliques. Lesdites essences contiennent également des traces de composés hautement insaturés de type dioléfiniques qui sont susceptibles de désactiver les catalyseurs par formation de gommes. La teneur en composés soufrés desdites essences est très variable en fonction de la provenance du type d'essence (vapocraqueur, craquage catalytique, cokéfaction, etc.) ou, dans le cas du craquage catalytique, de la sévérité appliquée au procédé. La teneur en composés soufrés peut fluctuer entre 200 et 5000 ppm de soufre, de préférence entre 500 et 2000 ppm de soufre par rapport à la masse de la charge. Les familles des composés thiophéniques et benzothiophéniques sont majoritaires, les mercaptans n'étant présents qu'à des niveaux très faibles généralement compris entre 10 et 100 ppm. Les essences issues du craquage catalytique contiennent également des composés azotés dans des proportions n'excédant généralement pas 100 ppm.

Le procédé d'hydrodésulfuration d'au moins une coupe essence selon l'invention est avantageusement mis en oeuvre à une température comprise entre 200°C et 400°C, de préférence entre 250°C et 350°C, à une pression totale comprise entre 1 MPa et 3 MPa et de préférence entre 1 MPa et 2,5 MPa, avec un ratio volume d'hydrogène par volume de charge hydrocarbonée compris entre 100 et 600 litres par litre et de préférence compris entre 200 et 400 litres par litre et à une Vitesse Volumique Horaire (VVH) définie par le rapport du débit volumique de charge hydrocarbonée liquide par le volume de catalyseur chargé dans le réacteur comprise entre 1 et 10 h⁻¹, et de préférence entre 2 et 8 h⁻¹.

Selon l'invention, le catalyseur utilisé dans ledit procédé d'hydrodésulfuration comprend sous sa forme oxyde, c'est à dire avant d'avoir subi une étape de sulfuration générant la phase active sulfure, au moins un métal du groupe VIB et/ou au moins un métal du groupe VIII de la classification périodique présent(s) sous forme d'au moins un polyoxométallate choisi parmi les hétéropolyanions de Keggin de formule PCoMo₁₁O₄₀⁶⁻ et PMo₁₂O₄₀³⁻, lesdits polyoxométallates étant présents au sein d'une matrice oxyde silicique mésostructurée appartenant à la famille de matériaux dénommé SBA.

Plus précisément, lesdits polyoxométallates présents au sein de ladite matrice sont piégés dans les parois de ladite matrice. Lesdits polyoxométallates ne sont donc pas simplement déposés par exemple par imprégnation à la surface des pores de ladite matrice mais sont localisés au sein même des parois de ladite matrice.
La localisation particulière desdits polyoxométallates au sein même des parois de ladite matrice oxyde silicique mésostructurée permet une meilleure interaction entre ladite matrice servant de support et la phase active et/ou ses précurseurs oxydes comprenant lesdits polyoxométallates. Il en résulte également une amélioration du maintien des propriétés texturales et structurales des matrices oxydes siliciques mésostructurées, une amélioration du maintien de la structure dudit polyoxométallate et de préférence dudit hétéropolyanion après post-traitement du solide final, ainsi qu'une amélioration de la dispersion, de la résistance thermique et de la résistance chimique dudit polyoxométallate.

Les polyoxométallates englobent deux familles de composés, les isopolyanions et les hétéropolyanions. Ces deux familles de composés sont définis dans l'article Heteropoly and Isopoly Oxométallates, Pope, Ed Springer-Verlag, 1983.

Les polyoxométallates utilisés selon l'invention sont choisis parmi les polyoxométallates de formule PMo₁₂O₄₀³⁻, HPCoMo₁₁O₄₀⁶⁻.

L'utilisation de polyoxométallates pour la préparation de catalyseurs mis en oeuvre dans le procédé selon l'invention présente de nombreux avantages du point de vue catalytique. Lesdits polyoxométallates conduisent, après sulfuration, à des catalyseurs dont les performances catalytiques sont améliorées grâce à un meilleur effet de promotion c'est à dire à une meilleure synergie entre l'élément du groupe VIB et l'élément du groupe VIII.

Ledit catalyseur comprend une teneur massique de l'élément du groupe VIB exprimée en pourcentage poids d'oxyde par rapport à la masse totale du catalyseur comprise entre 1 et 25% poids et de préférence comprise entre 2,5 et 22% poids.
Lesdites teneurs sont présent ous forme d'au moins un polyoxométallate au sein de la matrice oxyde mésostructurée.

Ledit catalyseur comprend une teneur massique de l'élément du groupe VIII exprimée en pourcentage poids d'oxyde par rapport à la masse totale du catalyseur comprise entre 0,1 et 10% poids et de préférence comprise entre 1 et 7 % poids.
Lesdites teneurs sont les teneurs totales en élément du groupe VIII quelle que soit la forme dudit élément du groupe VIII présent dans ledit catalyseur et éventuellement quel que soit son mode d'introduction. Lesdites teneurs sont donc représentatives de la teneur en élément du groupe VIII présent soit, sous forme d'au moins un polyoxométallate au sein de la matrice oxyde mésostructurée qu'il soit en position M ou en position X, soit présent sous la forme de contre-ion et/ou éventuellement ajoutés à différentes étapes de la préparation de ladite matrice oxyde mésostructurée comme décrit ci-après, soit sous toute autre forme dépendant de son mode d'introduction, telle que par exemple sous forme oxyde.

Ledit catalyseur comprend une teneur massique en phosphore exprimée en pourcentage poids d'oxyde par rapport à la masse totale du catalyseur comprise entre 0,1 et 10% poids, de préférence entre 0,5 et 8% poids, et de manière encore plus préférée entre 0,5 et 6% poids d'oxyde par rapport au catalyseur final.
Lesdites teneurs sont les teneurs totales en phosphore quelle que soit la forme dudit élément dopant présent dans ledit catalyseur et quel que soit son mode d'introduction. Lesdites teneurs sont donc représentatives à la fois de la teneur en phosphore présent sous forme d'au moins un polyoxométallate au sein de la matrice oxyde mésostructurée et éventuellement ajouté à différentes étapes de la préparation de ladite matrice oxyde mésostructurée comme décrit ci après.

Selon l'invention, lesdits polyoxométallates définis ci-dessus sont présents au sein d'une matrice oxyde silicique mésostructurée appartenant à la famille de matériaux dénommé SBA ayant une taille de pore comprise entre 4 et 50 nm et présentant des parois amorphes d'épaisseur comprise entre 3 et 7 nm.

Généralement, lesdits matériaux dits mésostructurés sont avantageusement obtenus par des méthodes de synthèse dites de "chimie douce" (G. J. de A. A. Soler-Illia, C. Sanchez, B. Lebeau, J. Patarin, Chem. Rev., 2002, 102, 4093) à basse température via la coexistence en solution aqueuse ou dans des solvants de polarité marquée de précurseurs inorganiques avec des agents structurants, généralement des tensioactifs moléculaires ou supramoléculaires, ioniques ou neutres. Le contrôle des interactions électrostatiques ou par liaisons hydrogènes entre les précurseurs inorganiques et l'agent structurant conjointement lié à des réactions d'hydrolyse/condensation du précurseur inorganique conduit à un assemblage coopératif des phases organique et inorganique générant des agrégats micellaires de tensioactifs de taille uniforme et contrôlée au sein d'une matrice inorganique. Ce phénomène d'auto-assemblage coopératif régi, entre autres, par la concentration en agent structurant peut être induit par évaporation progressive d'une solution de réactifs dont la concentration en agent structurant est inférieure à la concentration micellaire critique, ou bien via la précipitation ou la gélification directe du solide lors de l'emploi d'une solution de précurseurs plus concentrée en réactifs.

La libération de la porosité est ensuite obtenue par élimination du tensioactif, celle-ci étant réalisée classiquement par des procédés d'extraction chimique ou par traitement thermique.

En fonction de la nature des précurseurs inorganiques et de l'agent structurant employé ainsi que des conditions opératoires imposées, plusieurs familles de matériaux mésostructurés ont été développées. La famille M41S est constituée de matériaux mésoporeux obtenus via l'emploi de surfactants ioniques comme des sels d'ammonium quaternaire, possédant une structure généralement hexagonale, cubique ou lamellaire, des pores de taille uniforme comprise dans une gamme de 1,5 à 10 nm et des parois amorphes d'épaisseur de l'ordre de 1 à 2 nm. La famille M41S a initialement été développée par Mobil dans l'article J. S. Beck, J. C. Vartuli, W. J. Roth, M. E. Leonowicz, C. T. Kresge, K. D. Schmitt, C. T.-W. Chu, D. H. Oison, E. W. Sheppard, S. B. McCullen, J. B. Higgins, J. L. Schlenker, J. Am. Chem. Soc., 1992, 114, 27, 10834.

La famille de matériaux dénommée SBA se caractérise par l'utilisation d'agents structurants macromoléculaires amphiphiles de type copolymères à bloc. Ces matériaux sont caractérisés par une structure généralement hexagonale, cubique ou lamellaire, des pores de taille uniforme comprise dans une gamme de 4 à 50 nm et des parois amorphes d'épaisseur comprise dans une gamme de 3 à 7 nm.

La matrice oxyde mésostructurée utilisée dans le catalyseur mis en oeuvre dans le procédé selon l'invention est purement silicique.
La matrice oxyde silicique mésostructurée utilisée dans le catalyseur mis en oeuvre dans le procédé selon l'invention est une matrice mésostructurée appartenant à la famille de matériaux dénommée SBA.
De préférence, ladite matrice oxyde silicique mésostructurée est une matrice du type SBA-15.

Selon l'invention, lesdits polyoxométallates définis ci-dessus sont présents au sein d'une matrice oxyde silicique mésostructurée. Plus précisément, lesdits polyoxométallates présents au sein de ladite matrice oxyde silicique mésostructurée, sont piégés au sein même de ladite matrice. De préférence, lesdits polyoxométallates sont présents dans les parois de ladite matrice mésostructurée. L'occlusion desdits polyoxométallates dans les parois de ladite matrice mésostructurée est réalisable par une technique de synthèse dite directe, lors de la synthèse de ladite matrice servant de support par ajout de polyoxométallates désirés aux réactifs précurseurs du réseau inorganique oxyde de la matrice.

Ladite matrice oxyde silicique mésostructurée comprenant lesdits polyoxométallates piégés dans ses parois mise en oeuvre dans le procédé selon l'invention est avantageusement exclusivement préparée par synthèse directe.
Plus précisément, ladite matrice oxyde silicique mésostructurée est avantageusement obtenue selon un procédé de préparation comprenant : a) une étape de formation d'au moins un polyoxométallate de formule précitée selon une méthode connue de l'Homme du métier, b) une étape de mélange en solution d'au moins un tensioactif, d'au moins un précurseur de silice puis d'au moins un polyoxométallate obtenu selon l'étape a) pour obtenir une solution colloïdale, c) une étape de mûrissement de ladite solution colloïdale obtenue à l'issue de l'étape b) en temps et en température ; d) une étape éventuelle d'autoclavage de la suspension obtenue à l'issue de l'étape c), e) une étape de filtration de la suspension obtenue à l'issue de l'étape c) et après passage éventuel dans l'étape d'autoclavage, de lavage et de séchage du solide ainsi obtenu, f) une étape d'élimination dudit tensioactif conduisant à la génération de la mésoporosité uniforme et organisée de la matrice mésostructurée, g) une étape optionnelle de traitement du solide obtenu à l'issue de l'étape f) afin de régénérer partiellement ou en intégralité l'entité polyoxométallate éventuellement partiellement ou totalement décomposée lors de l'étape f) et h) une étape de séchage optionnelle dudit solide ainsi obtenu constitué de ladite matrice oxyde silicique mésostructurée comprenant lesdits polyoxométallates piégés dans ses parois.

L'étape a) de formation d'au moins un polyoxométallate de formule précitée est avantageusement mise en oeuvre selon une méthode connue de l'Homme du métier. De préférence, les polyoxométallates décrits ci-dessus ainsi que leurs procédés de préparation associés sont utilisés dans le procédé de préparation de ladite matrice oxyde silicique mésostructurée comprenant lesdits polyoxométallates piégés dans ses parois.

L'étape b) dudit procédé de préparation consiste en le mélange en solution d'au moins un tensioactif, et d'au moins un précurseur de silice puis d'au moins un polyoxométallate obtenu selon l'étape a) pour obtenir une solution colloïdale.
De préférence, au moins un tensioactif et au moins un précurseur de silice sont mélangés en solution pendant une durée comprise entre 15 minutes et 1 heure puis au moins un polyoxométallate obtenu selon l'étape a) en mélange dans une solution de même nature et de préférence la même solution est ajouté au mélange précédent pour obtenir une solution colloïdale.
L'étape b) de mélange se fait sous agitation à une température comprise entre 25°C et 80°C et de préférence comprise entre 25°C et 50°C pendant une durée comprise entre 5 minutes et 2 h et de préférence entre 30 minutes et 1 h.

La solution dans laquelle sont mélangés au moins un tensioactif, au moins un polyoxométallate obtenu selon l'étape a) et au moins un précurseur de silice conformément à l'étape b) dudit procédé de préparation peut avantageusement être acide, basique ou neutre. De préférence, ladite solution est acide ou neutre. Les acides utilisés pour obtenir une solution acide sont avantageusement choisis parmi l'acide chlorhydrique, l'acide sulfurique et l'acide nitrique. Ladite solution peut avantageusement être aqueuse ou peut avantageusement être un mélange eau-solvant organique, le solvant organique étant de préférence un solvant polaire, de manière préférée un alcool, et de manière plus préférée, le solvant est l'éthanol. Ladite solution peut également être avantageusement pratiquement organique, de préférence pratiquement alcoolique, la quantité d'eau étant telle que l'hydrolyse des précurseurs inorganiques soit assurée. La quantité d'eau est donc de préférence stoechiométrique. De manière très préférée, ladite solution est une solution aqueuse acide.

Le tensioactif utilisé pour la préparation du mélange dans l'étape b) dudit procédé de préparation est un tensioactif ionique ou non ionique ou un mélange des deux. De préférence, le tensioactif ionique est choisi parmi les ions phosphonium et ammonium et très préférentiellement parmi les sels d'ammonium quaternaire comme le bromure de cétyltriméthylammonium (CTAB). De préférence, le tensioactif non ionique peut être tout copolymère possédant au moins deux parties de polarités différentes leur conférant des propriétés de macromolécules amphiphiles. Ces copolymères peuvent comporter au moins un bloc faisant partie de la liste non exhaustive des familles de polymères suivantes : les polymères fluorés (-[CH₂-CH₂-CH₂-CH₂-O-CO-R1- avec R1 = C₄F₉, C₈F₁₇, etc.), les polymères biologiques comme les polyacides aminés (poly-lysine, alginates, etc.), les dendrimères, les polymères constitués de chaînes de poly(oxyde d'alkylène). De façon générale, tout copolymère à caractère amphiphile connu de l'Homme du métier peut être utilisé (S. Förster, M. Antionnetti, Adv. Mater, 1998, 10, 195 ; S. Förster, T. Plantenberg, Angew. Chem. Int. Ed, 2002, 41, 688 ; H. Cölfen, Macromol. Rapid Commun, 2001, 22, 219). De manière préférée, on utilise un copolymère bloc constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, l'un au moins des blocs est constitué d'une chaîne de poly(oxyde d'alkylène) de nature hydrophile tandis que l'un au moins des autres blocs est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées (PEO)ₓ et (PEO)_{z} et les chaînes de poly(oxyde d'alkylène) de nature hydrophobe sont des chaînes de poly(oxyde de propylène) notées (PPO)_{y}, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, on utilise un composé de formule (PEO)ₓ-(PPO)_{y}-(PEO)_{z} où x est compris entre 5 et 300 et y est compris entre 33 et 300 et z est compris entre 5 et 300. De préférence, les valeurs de x et z sont identiques. On utilise très avantageusement un composé dans lequel x = 20, y = 70 et z = 20 (P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques. Pour un copolymère à quatre blocs, deux des blocs sont constitués d'une chaîne de poly(oxyde d'alkylène) de nature hydrophile et les deux autres blocs sont constitués d'une chaîne de poly(oxydes) d'alkylène de nature hydrophobe. De façon préférée, on utilise pour la préparation du mélange de l'étape b) dudit procédé de préparation le mélange d'un tensioactif ionique tel que le CTAB et d'un tensioactif non ionique tel que le P123.

La matrice oxyde mésostructurée utilisée dans le catalyseur mis en oeuvre dans le procédé selon l'invention étant purement silicique, le(s) précurseur(s) silicique(s) utilisé(s) pour la formation de la matrice oxyde mésostructurée est(sont) obtenu(s) à partir de toute source de silice et avantageusement d'un précurseur silicate de sodium de formule Na₂SiO₃, d'un précurseur chloré de formule SiCl₄, d'un précurseur alcoxyde de formule Si(OR)₄ où R = H, méthyle, éthyle ou d'un précurseur chloroalcoxyde de formule Si(OR)₄₋ₓClₓ où R = H, méthyle, éthyle, x étant compris entre 0 et 4. Le précurseur silicique peut également avantageusement être un précurseur alcoxyde de formule Si(OR)₄₋ₓR'ₓ où R = H, méthyle, éthyle et R' est une chaîne alkyle ou une chaîne alkyle fonctionnalisée, par exemple par un groupement thiol, amino, β dicétone, acide sulfonique, x étant compris entre 0 et 4.
Un précurseur silicique préféré est le tetraéthylorthosilicate (TEOS) de formule Si(OEt)₄.

Les polyoxométallates décrits ci-dessus sont utilisés dans l'étape b) du procédé de préparation de ladite matrice oxyde silicique mésostructurée comprenant lesdits polyoxométallates piégés dans ses parois.
Les polyoxométallates utilisés selon l'invention sont choisis parmi les polyoxométallates de formule PMo₁₂O₄₀³⁻, HPCoMo₁₁O₄₀⁶⁻.

L'étape c) dudit procédé de préparation consiste en une étape de mûrissement, c'est à dire à une étape de conservation sous agitation de la dite solution colloïdale obtenue à l'issue de l'étape b) à une température comprise entre 25°C et 80°C et de préférence comprise entre 25°C et 40°C pendant une durée comprise entre 1 h et 48 h et de préférence entre 20 h et 30 h.
A l'issue de l'étape c) de mûrissement, une suspension est obtenue.

L'étape d) optionnelle dudit procédé de préparation consiste en un autoclavage éventuel de la suspension obtenue à l'issue de l'étape c). Cette étape consiste à placer ladite suspension dans une enceinte fermée à une température comprise entre 80°C et 140°C, de préférence comprise entre 90°C et 120°C et de manière encore préférentielle comprise entre 100°C et 110°C de façon à travailler en pression autogène inhérente aux conditions opératoires choisies. L'autoclavage est maintenu pendant une durée comprise entre 12 et 48 heures et de préférence entre 15 et 30 heures.

La suspension obtenue à l'issue de l'étape c) est ensuite filtrée selon l'étape e) et le solide ainsi obtenu est lavé et séché. Le lavage dudit solide obtenu après filtration et avant séchage se fait avantageusement avec une solution de même nature que la solution dans laquelle sont mélangés au moins un tensioactif, au moins un hétéropolyanion et au moins un précurseur silicique conformément à l'étape b) dudit procédé de préparation, puis par une solution aqueuse d'eau distillée.

Le séchage dudit solide obtenu après filtration et lavage au cours de l'étape e) dudit procédé de préparation est avantageusement réalisé dans un four à une température comprise entre 25°C et 140°C, de préférence entre 25°C et 100°C et de manière préférée entre 30°C et 80°C et pendant une durée comprise entre 10 et 48 h et de préférence comprise entre 10 et 24 h.

L'étape f) consiste ensuite en une étape d'élimination dudit tensioactif conduisant à la génération de la mésoporosité uniforme et organisée de la matrice mésostructurée.

L'élimination du tensioactif au cours de l'étape f) dudit procédé de préparation afin d'obtenir la matrice mésostructurée utilisé selon l'invention est avantageusement réalisée par traitement thermique et de préférence par calcination sous air à une température comprise entre 300°C et 1000°C et de préférence à une température comprise entre 400°C et 600°C pendant une durée comprise entre 1 et 24 heures et de préférence pendant une durée comprise entre 6 et 20 heures.

L'étape f) est éventuellement suivie d'une étape g) de traitement du solide afin de régénérer au moins partiellement ou en intégralité l'entité polyoxométallate éventuellement au moins partiellement ou totalement décomposée lors de l'étape f). Dans le cas où ledit polyoxométallate est totalement décomposé lors de l'étape f), ladite étape g) de régénération est obligatoire. Cette étape consiste avantageusement en un lavage du solide avec un solvant polaire en utilisant un extracteur de type Soxhlet. De manière préférée, le solvant d'extraction est choisi parmi les alcools, l'acétonitrile et l'eau. De préférence le solvant est un alcool et de manière très préférée le solvant est le méthanol. Ledit lavage est réalisé pendant une durée comprise entre 1 et 24 heures, et de préférence entre 1 et 8 heures à une température comprise entre 65 et 110 °C et de préférence comprise entre 90 et 100°C. L'extraction au solvant polaire permet non seulement de reformer lesdits polyoxométallates piégés dans les parois de ladite matrice mais aussi d'éliminer lesdits polyoxométallates éventuellement formés à la surface de ladite matrice.

Dans le cas où l'étape g) est obligatoire, ladite étape g) est suivie de l'étape h). L'étape h) consiste en une étape de séchage dudit solide ainsi obtenu, ledit solide étant constitué de ladite matrice oxyde silicique mésostructurée comprenant lesdits polyoxométallates piégés dans ses parois. Le séchage dudit solide est avantageusement réalisé dans un four ou dans une étuve à une température comprise entre 40°C et 140°C de préférence entre 40°C et 100°C et pendant une durée comprise entre 10 et 48 h et de préférence entre 10 et 24 h.

Ladite matrice oxyde silicique mésostructurée comprenant lesdits polyoxométallates piégés dans ses parois mise en oeuvre dans le procédé selon l'invention présente avantageusement une surface spécifique comprise entre 100 et 1000 m²/g et de manière très avantageuse comprise entre 300 et 500 m²/g.

Ladite matrice oxyde mésostructurée comprenant lesdits polyoxométallates piégés dans ses parois, c'est à dire le catalyseur sous sa forme oxyde, présente une forme de chacune des particules élémentaires la constituant, non homogène, c'est à dire une forme irrégulière et de préférence non sphérique. De préférence, lesdites particules élémentaires constituant ladite matrice comprenant lesdits polyoxométallates piégés dans ses parois sont non sphériques.
A l'issue de la méthode de préparation par synthèse dite directe, lesdites particules élémentaires constituant ladite matrice comprenant lesdits polyoxométallates piégés dans ses parois présentent avantageusement une taille moyenne comprise entre 50 nm et 10 microns et de préférence comprise entre 50 nm et 1 micron.

D'autres éléments peuvent avantageusement être ajoutés à différentes étapes de la préparation de ladite matrice oxyde silicique mésostructurée utilisée dans l'invention. Lesdits éléments sont de préférence choisis parmi les éléments du groupe VIII appelés promoteurs, les éléments dopants et les composés organiques. De manière très préférée, ledit métal du groupe VIII est choisi parmi le nickel et le cobalt et de manière plus préférée, le métal du groupe VIII est constitué uniquement de cobalt ou de nickel. De manière encore plus préférée, le métal du groupe VIII est le cobalt. Les éléments dopants sont le phosphore.

Lesdits éléments peuvent avantageusement être ajoutés seuls ou en mélange au cours d'une ou de plusieurs étapes du procédé de préparation de ladite matrice choisies parmi les étapes i), ii), iii) et iv) suivantes.
i) Lesdits éléments peuvent avantageusement être introduits lors de l'étape b) de mélange en solution d'au moins un tensioactif, d'au moins un précurseur de silice puis d'au moins un polyoxométallate obtenu selon l'étape a) pour obtenir une solution colloïdale, du procédé de préparation de ladite matrice.
ii) Lesdits éléments peuvent avantageusement être introduits après l'étape f) et avant l'étape g) dudit procédé de préparation. Lesdits éléments peuvent avantageusement être introduits par toute technique connue de l'Homme du métier et de manière avantageuse par imprégnation à sec.
iii) Lesdits éléments peuvent avantageusement être introduits après l'étape h) de séchage dudit procédé de préparation avant mise en forme. Lesdits éléments peuvent avantageusement être introduits par toute technique connue de l'Homme du métier et de manière avantageuse par imprégnation à sec.
iv) Lesdits éléments peuvent avantageusement être introduits après l'étape de mise en forme de ladite matrice. Lesdits éléments peuvent avantageusement être introduits par toute technique connue de l'Homme du métier et de manière avantageuse par imprégnation à sec.

Après chacune des étapes ii) iii) ou iv) décrites ci-dessus, le solide obtenu constitué de ladite matrice oxyde silicique mésostructurée comprenant lesdits polyoxométallates piégés dans ses parois peut avantageusement subir une étape de séchage et éventuellement une étape de calcination sous air éventuellement enrichi en O₂ à une température comprise entre 200 et 600°C et de préférence comprise entre 300 et 500°C pendant une durée comprise entre 1 et 12 heures et de façon préférée pendant une durée comprise entre 2 et 6 heures.

Les sources d'éléments du groupe VIII qui peuvent avantageusement être utilisées, sont bien connues de l'Homme du métier. Les nitrates de préférence choisis parmi le nitrate de cobalt et le nitrate de nickel, les sulfates, les hydroxydes choisis parmi les hydroxydes de cobalt et les hydroxydes de nickel, les phosphates, les halogénures choisis parmi les chlorures, les bromures et les fluorures, les carboxylates choisis parmi les acétates et les carbonates peuvent avantageusement être utilisés comme sources d'éléments du groupe VIII.
Les éléments promoteurs du groupe VIII sont avantageusement présents dans le catalyseur à des teneurs comprises entre 0,1 et 10% poids, de préférence entre 1 et 7% poids d'oxyde par rapport au catalyseur final. Lesdites teneurs sont les teneurs totales en élément du groupe VIII quelle que soit la forme dudit élément du groupe VIII présent dans ledit catalyseur et quel que soit son mode d'introduction. Lesdites teneurs sont donc représentatives à la fois de la teneur en élément du groupe VIII présent sous forme d'au moins un polyoxométallate au sein de la matrice oxyde silicique mésostructurée et de la teneur en élément du groupe VIII ajouté à différentes étapes de la préparation de ladite matrice oxyde silicique mésostructurée.

Les éléments dopants pouvant avantageusement être introduits sont le phosphore. L'élément dopant est un élément ajouté, qui en lui-même ne présente aucun caractère catalytique mais qui accroît l'activité catalytique du(des) métal(taux).
Ledit élément dopant peut être avantageusement introduit seul ou en mélange lors de la synthèse dudit matériau utilisé dans l'invention. Il peut également être introduit par imprégnation du matériau utilisé selon l'invention avant ou après séchage, avant ou après réextraction. Enfin, ledit dopant peut-être introduit par imprégnation dudit matériau utilisé dans l'invention après mise en forme.

Les éléments dopants sont avantageusement présents dans le catalyseur utilisé selon la présente invention à des teneurs comprises entre 0,1 et 10% poids, de préférence entre 0,5 et 8% poids, et de manière encore plus préférée entre 0,5 et 6% poids d'oxyde par rapport au catalyseur final. Lesdites teneurs sont les teneurs totales en élément dopant quelle que soit la forme dudit élément dopant présent dans ledit catalyseur et quel que soit son mode d'introduction. Lesdites teneurs sont donc représentatives à la fois de la teneur présent sous forme d'au moins un polyoxométallate au sein de la matrice oxyde silicique mésostructurée et de la teneur en élément dopant ajouté par à différentes étapes de la préparation de ladite matrice oxyde silicique mésostructurée.

La source de phosphore peut avantageusement être l'acide orthophosphorique H₃PO₄, les sels et esters correspondants ou les phosphates d'ammonium. Le phosphore est introduit en même temps que le(s) élément(s) du groupe VIB sous la forme desdits hétéropolyanions de Keggin. Le phosphore, lorsqu'il n'est pas introduit lors de la synthèse de ladite matrice mais en post-imprégnation, peut avantageusement être introduit sous la forme d'un mélange d'acide phosphorique et d'un composé organique basique contenant de l'azote tels que l'ammoniaque, les amines primaires et secondaires, les amines cycliques, les composés de la famille de la pyridine et des quinoléines et les composés de la famille du pyrrole.

Une fois l'élément dopant introduit par post-imprégnation, l'Homme du métier peut procéder avantageusement à un séchage par exemple à 120°C, et éventuellement ensuite à une calcination de façon préférée sous air en lit traversé, par exemple à 450°C pendant 4 heures.

Les composés organiques ajoutés sont de préférence choisis parmi les agents chélatants, les agents non chélatants, les agents réducteurs et les additifs connus de l'Homme du métier. Lesdits composés organiques sont avantageusement choisis parmi les mono-, di- ou polyalcools éventuellement éthérifiés, les acides carboxyliques, les sucres, les mono, di ou polysaccharides non cycliques tels que le glucose, le fructose, le maltose, le lactose ou le sucrose, les esters, les éthers, les éthers-couronnes, les composés contenant du soufre ou de l'azote comme l'acide nitriloacétique, l'acide éthylènediaminetétraactique, ou la diéthylènetriamine.

Ladite matrice oxyde silicique mésostructurée comprenant lesdits polyoxométallates piégés dans ses parois et servant de support du catalyseur peut être obtenue sous forme de poudre, de billes, de pastilles, de granulés ou d'extrudés, les opérations de mises en forme étant réalisées selon les techniques classiques connues de l'Homme du métier. De préférence, ladite matrice oxyde silicique mésostructurée selon l'invention est obtenue sous forme de poudre et utilisée mise en forme sous forme d'extrudés ou de billes.

Lors de ces opérations de mise en forme, il est également possible d'ajouter à ladite matrice oxyde silicique mésostructurée comprenant lesdits polyoxométallates piégés dans ses parois, au moins un matériau oxyde poreux de préférence choisi dans le groupe formé par l'alumine, la silice, la silice-alumine, la magnésie, l'argile, l'oxyde de titane, l'oxyde de zirconium, l'oxyde de lanthane, l'oxyde de cérium, les phosphates d'aluminium, les phosphates de bore, ou un mélange d'au moins deux des oxydes cités ci-dessus et les combinaisons alumine-oxyde de bore, les mélanges alumine-titane, alumine-zircone et titane-zircone. Il est également possible d'ajouter les aluminates, tels que par exemple les aluminates de magnésium, de calcium, de baryum, de manganèse, de fer, de cobalt, de nickel, de cuivre et de zinc, les aluminates mixtes tels que par exemple ceux contenant au moins deux des métaux cités ci-dessus. Il est également avantageusement possible d'ajouter les titanates, tels que par exemple les titanates de zinc, nickel, cobalt. Il est également avantageusement possible d'employer des mélanges d'alumine et de silice et des mélanges d'alumine avec d'autres composés tels que par exemple les éléments du groupe VIB, le phosphore, le fluor ou le bore. Il est également possible d'employer des argiles simples synthétiques ou naturelles de type phyllosilicate 2:1 dioctaédrique ou phyllosilicate 3:1 trioctaédrique telles que la kaolinite, l'antigorite, la chrysotile, la montmorillonnite, la beidellite, la vermiculite, le talc, l'hectorite, la saponite, la laponite. Ces argiles peuvent être éventuellement délaminées. Il est également avantageusement possible d'utiliser des mélanges d'alumine et d'argile et des mélanges de silice-alumine et d'argile.

Ladite matrice oxyde silicique mésostructurée comprenant lesdits polyoxométallates piégés dans ses parois est caractérisée par plusieurs techniques d'analyses et notamment par diffraction des rayons X aux bas angles (DRX aux bas angles), par diffraction des rayons X aux grands angles (DRX), par volumétrie à l'azote (BET), par microscopie électronique à transmission (MET) éventuellement couplée à une analyse X, par microscopie électronique à balayage (MEB), par fluorescence X (FX) et par toute technique connue de l'Homme du métier pour caractériser la présence de polyoxométallates comme les spectroscopies, en particulier Raman, UV-visible ou encore infrarouge ainsi que les microanalyses. Des techniques telles que la résonance magnétique nucléaire (RMN) ou encore la résonance paramagnétique électronique (RPE) (notamment dans le cas de l'utilisation d'hétéropolyanions réduits), pourront aussi également être utilisées selon le type d'hétéropolyanions employés.

A l'issue du procédé de préparation décrit ci-dessus, le catalyseur se présente, sous sa forme oxyde, sous la forme d'un solide constitué d'une matrice oxyde silicique mésostructurée comprenant lesdits polyoxométallates piégés dans ses parois.

Conformément à l'invention, ledit catalyseur, sous sa forme oxyde, est sulfuré avant d'être mis en oeuvre dans le procédé d'hydrodésulfuration selon l'invention.
Cette étape de sulfuration génère la phase sulfure active. En effet, la transformation d'au moins un polyoxométallate piégé dans la matrice oxyde mésostructurée en sa phase active sulfurée associée est avantageusement réalisée par sulfuration, c'est à dire par un traitement en température de ladite matrice au contact d'un composé organique soufré décomposable et générateur d'H₂S ou directement au contact d'un flux gazeux d'H₂S dilué dans H₂ à une température comprise entre 200 et 600°C et de préférence comprise entre 300 et 500°C selon des procédés bien connus de l'Homme du métier. Plus précisément, la sulfuration est réalisée 1) dans une unité du procédé elle-même à l'aide d'une charge hydrocarbonée de type essence vierge d'oléfine en présence d'hydrogène et d'hydrogène sulfuré (H₂S) introduit tel quel ou issu de la décomposition d'un composé soufré organique, on parle alors de sulfuration in-situ ou 2) préalablement au chargement du catalyseur dans l'unité, on parle alors de sulfuration ex-situ. Dans le cas d'une sulfuration ex-situ, des mélanges gazeux peuvent avantageusement être mis en oeuvre tels que les mélanges H₂/H₂S ou N₂/H₂S. Le catalyseur sous sa forme oxyde peut aussi avantageusement être sulfuré ex-situ à partir de composés modèles en phase liquide, l'agent sulfurant étant alors choisi parmi le diméthyldisulfure (DMDS), le diméthylsulfure, le n-butylmercaptan, les composés polysulfures de type tertiononylpolysulfure, ceux-ci étant dilués dans
une matrice organique composée de molécules aromatiques ou alkyles.

Avant ladite étape de sulfuration, ledit catalyseur sous sa forme oxyde constitué d'une matrice oxyde silicique mésostructurée comprenant lesdits polyoxométallates piégés dans ses parois peut avantageusement être prétraité thermiquement selon des méthodes bien connues de l'Homme du métier, de préférence par calcination sous air à une température comprise entre 300 et 1000°C et de préférence une température comprise entre 500 à 600°C pendant une durée comprise entre 1 et 24 heures et de préférence pendant une durée comprise entre 6 et 15 heures.

Selon un mode de réalisation préféré, les polyoxométallates piégés dans les parois de ladite matrice oxyde silicique mésostructurée peuvent avantageusement être sulfurés partiellement ou totalement au moment du procédé de préparation par synthèse directe de ladite matrice oxyde silicique mésostructurée comprenant lesdits polyoxométallates utilisés selon l'invention et de préférence au cours de l'étape b) dudit procédé de préparation, par l'introduction dans la solution, en plus d'au moins un tensioactif, d'au moins un polyoxométallate et d'au moins un précurseur de silice, de précurseurs soufrés avantageusement choisis parmi la thiourée, la thioacétamide, les mercaptans, les sulfures et les disulfures. La décomposition à basse température, c'est à dire à une température comprise entre 80 et 90°C desdits précurseurs soufrés, soit lors de l'étape c) de mûrissement soit lors de l'étape d) d'autoclavage entraine la formation de H₂S permettant ainsi la sulfuration desdits polyoxométallates. Selon un autre mode de réalisation préféré, la sulfuration partielle ou totale desdits polyoxométallates peut avantageusement être réalisée par introduction desdits précurseurs soufrés dans l'étape g) de régénération partielle ou totale desdits polyoxométallates piégés dans ladite matrice oxyde silicique mésostructurée du catalyseur utilisé dans l'invention.

Le catalyseur mis en oeuvre dans le procédé d'hydrodésulfuration selon l'invention peut avantageusement être utilisé dans tout procédé, connu de l'Homme du métier, permettant de désulfurer des coupes hydrocarbonées, et de préférence des coupes essences de craquage catalytique. Le procédé d'hydrodésulfuration selon l'invention peut avantageusement être mis en oeuvre dans tout type de réacteur opéré en lit fixe ou en lit mobile ou en lit bouillonnant. De préférence, ledit procédé d'hydrodésulfuration est mis en oeuvre dans un réacteur opéré en lit fixe.

### Exemples

Les exemples qui suivent précisent l'invention sans toutefois en limiter la portée.

### Exemple 1 (non conforme) : préparation d'un catalyseur A1 présentant une phase active à base de cobalt et de molybdène déposée par imprégnation à sec d'un support silicique mésostructuré de type SBA-15 d'une solution contenant les précurseurs moléculaires classiques correspondants.

Un matériau silicique mésostructuré de type SBA-15 est synthétisé conformément à l'enseignement de la publication D. Zhao, J. Feng, Q. Huo, N. Melosh, G. H. Frederickson, B. F. Chmelka, G. D. Stucky, Science, 1998, 279, 548, de la façon suivante :
2 g de tensioactif Pluronic P₁₂₃ (PEO₂₀PPO₇₀PEO₂₀) sont dispersés dans 15 ml d'eau et 60 ml d'une solution d'acide chlorhydrique 2M sous agitation. 4,25 g de précurseur de silice tetraéthylorthosilicate (TEOS) de formule Si(OEt)₄ sont ajoutés à la solution homogène et l'ensemble est laissé sous agitation à 40°C pendant 24 heures. La suspension ainsi obtenue est alors versée dans un autoclave tefloné de 250 ml et laissée à 100°C pendant 24 heures. Le solide est alors filtré. La poudre est ensuite séchée à l'air à 100°C puis calcinée à 550°C sous air pendant 4 h afin de décomposer le copolymère et ainsi libérer la porosité. Le solide obtenu présente les propriétés texturales suivantes et en particulier une surface spécifique, un volume poreux, et un diamètre de pores respectivement de 670 m²/g, 0,9 ml/g et 6,3 nm. Le catalyseur A1 est préparé selon la méthode qui consiste à réaliser une imprégnation à sec d'une solution aqueuse préparée à partir d'heptamolybdate d'ammonium et de nitrate de cobalt, le volume de la solution contenant les précurseurs des métaux étant rigoureusement égal au volume poreux de la masse de support. Les concentrations en précurseurs de la solution aqueuse sont ajustées de manière à déposer sur le support les teneurs pondérales souhaitées. Le catalyseur est ensuite séché pendant 12 heures à 120°C puis calciné sous air à 500°C pendant 2 heures.

Le catalyseur A1 ainsi obtenu à l'état oxyde, présente une teneur en molybdène de 20,2 exprimé en % poids de trioxyde de molybdène (MoO₃) et une teneur en cobalt de 5,4 exprimé en % poids d'oxyde de cobalt (CoO). Le ratio atomique Co/Mo de ce catalyseur est de 0,49. Ce catalyseur est non conforme à l'invention. Le catalyseur A1 obtenu a été analysé par spectroscopie Raman. Aucune bande caractéristique de la présence d'un hétéropolyanion n'est détectée.

### Exemple 2 (non conforme) : préparation d'un catalyseur A2 de formulation CoMoP à base de Cobalt, de molybdène et de phosphore déposés par imprégnation à sec d'un support silicique mésostructuré de type SBA-15 d'une solution contenant l'hétéropolvacide de Keggin de formule PMo₁₂O₄₀³⁻, 3H⁺

Un matériau silicique mésostructuré de type SBA-15 est synthétisé comme dans l'exemple 1. Le solide obtenu présente les propriétés texturales suivantes et en particulier une surface spécifique, un volume poreux, et un diamètre de pores respectivement de 670 m²/g, 0,9 ml/g et 6,3 nm. Le catalyseur A2 est préparé selon la méthode qui consiste à réaliser une imprégnation à sec d'une solution aqueuse contenant l'hétéropolyacide de Keggin de formule PMo₁₂O₄₀³⁻, 3H⁺, c'est à dire l'acide phosphomolybdique. L'hétéropolyacide de Keggin de formule PMo₁₂O₄₀³⁻, 3H⁺ est acheté chez Aldrich.

Le volume de la solution contenant les précurseurs des métaux est rigoureusement égal au volume poreux de la masse de support.

Cette solution est préparée de la manière suivante :
a) la solubilisation de l'hétéropolyacide de Keggin PMo₁₂O₄₀³⁻, 3H⁺ est obtenue sous agitation en quelques minutes à température ambiante,
b) du carbonate de cobalt (pureté 99% massique) est alors introduit précautionneusement par petites quantités pour éviter toute exothermie et toute effervescence non contrôlée; la dissolution du carbonate est immédiate.

Le spectre Raman de la solution préparée présente bien les bandes caractéristiques des sels en solution.

Les concentrations en précurseurs de la solution aqueuse sont ajustées de manière à déposer sur le support les teneurs pondérales souhaitées. Le catalyseur est ensuite séché pendant 12 heures à 120°C.

Le catalyseur A2 ainsi obtenu à l'état oxyde, de formulation CoMoP a une teneur en molybdène de 21,5 exprimé en % poids de trioxyde de molybdène (MoO₃), une teneur en cobalt de 5,7 exprimé en % poids d'oxyde de cobalt (CoO) et une teneur en phosphore de 0,9 exprimé en % poids d'oxyde de (P₂O₅). Le ratio atomique Co/Mo de ce catalyseur est de 0,50 et le rapport molaire P/Mo est de 0,08. Ce catalyseur est non conforme à l'invention. Le catalyseur A2 obtenu a été analysé par spectroscopie Raman qui met en évidence les bandes à 994 cm⁻¹, 975 cm⁻¹, 895 cm⁻¹ et 605 cm⁻¹, caractéristiques de la présence de l'hétéropolyanion de Keggin de formule PMo₁₂O₄₀³⁻.

### Exemple 3 (conforme) préparation d'un catalyseur B conforme à l'invention comprenant l'hétéropolyacide de Keggin de formule PMo₁₂O₄₀³⁻, 3H⁺ piégé dans une matrice silicique mésostructurée de type SBA-15

L'hétéropolyacide de Keggin de formule PMo₁₂O₄₀³⁻, 3H⁺ est acheté chez Aldrich
La matrice silicique mésostructurée SBA-15 comprenant l'hétéropolyanion de Keggin de formule PMo₁₂O₄₀³⁻, 3H⁺ piégé dans ses parois est obtenue par synthèse directe selon le procédé de préparation suivant :
0,1 g de tensioactif bromure de cétyltriméthylammoniuim (CTAB) et 2,0 g de tensioactif Pluronic P₁₂₃ (PEO₂₀PPO₇₀PEO₂₀) sont dissous dans 62,5 g d'une solution d'acide chlorhydrique à 1,9 mol/l. 4,1 g de précurseur de silice tetraéthylorthosilicate (TEOS) de formule Si(OEt)₄ sont alors ajoutés, puis le milieu est agité pendant 45 min. 0,352 g de l'hétéropolyacide de Keggin de formule PMo₁₂O₄₀³⁻, 3H⁺ dans 10 g de la même solution d'acide chlorhydrique est ensuite ajouté. La solution colloïdale obtenue est ensuite laissée sous agitation pendant 20 heures à 40°C. La suspension est transvasée dans un autoclave téfloné pour un traitement à une température de 100°C pendant 24 heures. La suspension ainsi obtenue est alors filtrée puis le solide, après lavage avec 30 ml de la solution d'acide chlorhydrique à 1,9 mol/l et 60 ml d'eau distillée, est séché une nuit à l'étuve à 40°C. Le solide obtenu est alors calciné à une température palier de 490°C pendant 19 heures de manière à éliminer les tensioactifs et à libérer la mésoporosité dudit solide.

Le solide obtenu est ensuite introduit dans un extracteur de type Soxhlet et le système est porté à reflux en présence de méthanol pendant 4 heures de manière à régénérer partiellement l'hétéropolyanion partiellement décomposé lors de l'étape de calcination. Le solide est ensuite séché pour évacuer le solvant à une température de 90°C pendant 12 heures.

Le solide obtenu constitué de la matrice silicique mésostructurée SBA-15 comprenant l'hétéropolyacide de Keggin de formule PMo₁₂O₄₀³⁻ , 3H⁺ piégé dans ses parois est alors imprégné à sec par une solution de nitrate de cobalt puis séché à 120°C pendant 12 heures pour évacuer l'eau. Les teneurs finales exprimées en % poids d'oxydes CoO, MoO₃ et P₂O₅ sont respectivement de 5,4/20,6/0,8 par rapport à la masse totale du catalyseur. Le ratio atomique Co/Mo du catalyseur B est de 0,50 et le rapport molaire P/Mo est de 0,08. Le catalyseur B présente les propriétés texturales suivantes et en particulier une surface spécifique, un volume poreux, et un diamètre de pores respectivement de 350 m²/g, 0,9 ml/g, et 7,4 nm et est conforme à l'invention.

Le catalyseur B obtenu a été analysé par spectroscopie Raman. Il révèle une bande fine et relativement intense à 990 cm⁻¹ ainsi que la bande secondaire à 602 cm⁻¹ caractéristiques de l'hétéropolyacide de Keggin de formule PMo₁₂O₄₀³⁻, 3H⁺ en accord avec les précédents résultats publiés par A. Griboval, P. Blanchard, E. Payen, M. Fournier, J. L. Dubois, Chem. Lett. 1997, 12, 1259.

Le tableau 1 résume les formulations des catalyseurs, conformes et non conformes à l'invention.

**Tableau 1 : formulations des catalyseurs conformes et non conformes à l'invention.**

| Catalyseur | Support | CoO (% poids) | MoO₃ (% poids) | P₂O₅ (% poids) | Ratio molaire Co/Mo | Ratio molaire P/Mo |
|---|---|---|---|---|---|---|
| A1 (non conforme) | SBA-15 | 5,2 | 20,4 | 0 | 0,49 | 0 |
| A2 (non conforme) | SBA-15 | 5,7 | 21,5 | 0,9 | 0,51 | 0,08 |
| B (conforme) | SBA-15 | 5,4 | 20,6 | 0,8 | 0,50 | 0,08 |

### Exemple 4 : comparaison des catalyseurs en test molécules modèles

Une charge modèle représentative d'une essence de craquage catalytique (FCC) contenant 10% poids de 2,3-diméthylbut-2-ène et 0,33% poids de 3-méthylthiophène (soit 1000 ppm de soufre par rapport à la charge) est utilisée pour l'évaluation des différents catalyseurs. Le solvant utilisé est l'heptane. Les catalyseurs sous forme de poudre de granulométrie comprise entre 315 et 1000 microns sont préalablement sulfurés ex-situ en phase gaz à 500°C pendant 2 h sous flux d'H₂S dans H₂ (15% volumique).

La réaction est réalisée en réacteur fermé de type Grignard sous 3,5 MPa de pression d'hydrogène, à 250°C. Des échantillons sont prélevés à différents intervalles de temps et sont analysés par chromatographie en phase gazeuse de façon à observer la disparition des réactifs.

L'activité est exprimée en constante de vitesse kHDS de la réaction d'hydrodésulfuration (HDS), normalisée par volume de catalyseur sous forme oxyde, en supposant un ordre 1 par rapport aux composés soufrés. La sélectivité est exprimée en rapport normalisé des constantes de vitesse k_{HDS}/k_{HDO}, k_{HDO} étant la constante de vitesse pour la réaction d'hydrogénation des oléfines (HDO), normalisée par volume de catalyseur sous forme oxyde, en supposant un ordre 1 par rapport aux oléfines.

Les valeurs sont normalisées en prenant le catalyseur A1 comme référence et en prenant k_{HDS}/k_{HDO}=100 et k_{HDS}=100. Les résultats catalytiques font l'objet du tableau 2.

**Tableau 2 : performances sur charges modèles des catalyseurs conformes et non conformes à l'invention.**

| Catalyseur | Support | Préparation | kHDS | kHDS/kHDO |
|---|---|---|---|---|
| A1 (non conforme) | SBA-15 | CoMo | 100 | 100 |
| A2 (non conforme) | SBA-15 | PMo₁₂O₄₀³⁻ en post-imprégnation | 138 | 157 |
| B (conforme) | SBA-15 | PMo₁₂O₄₀³⁻ piégé | 191 | 141 |

L'imprégnation d'une silice mésoporeuse de type SBA-15 par une solution contenant l'hétéropolyanion de Keggin PMo₁₂O₄₀³⁻ (catalyseur A2, non conforme) permet de gagner en activité par rapport au catalyseur A1 de référence, préparé sans précaution particulière, c'est à dire en imprégnant sur ladite silice une solution contenant les précurseus de cobalt et de molybdène. La sélectivité est également très fortement améliorée par rapport au catalyseur A1 de référence.

Le fait de piéger la phase active, sous la forme de l'hétéropolyanion de Keggin PMo₁₂O₄₀³⁻ (catalyseur B, conforme) dans ladite matrice oxyde silicique mésostructurée permet d'augmenter fortement l'activité par rapport au catalyseur de référence A1 et d'obtenir une très bonne sélectivité pour la réaction d'hydrodésulfuration par rapport au catalyseur de référence A1.

Par ailleurs, le catalyseur B conforme à la présente invention comprenant l'hétéropolyanion de Keggin PMo₁₂O₄₀³⁻ piégé au sein de la matrice oxyde silicique mésostructurée permet également d'obtenir une activité améliorée par rapport au catalyseur A2 non conforme dans lequel une solution contenant l'hétéropolyanion de Keggin PMo₁₂O₄₀³⁻ est imprégnée sur une matrice oxyde silicique mésostructurée, tout en maintenant une sélectivité pour la réaction d'hydrodésulfuration similaire.

Les interactions entre la phase active sous forme d'hétéropolyanion et le réseau inorganique mésostructuré silicique de ladite matrice se traduisent par une amélioration significative de la sélectivité pour la réaction d'hydrodésulfuration par rapport à la réaction d'hydrogénation des oléfines du catalyseur B conforme à l'invention, par rapport aux catalyseurs A1 non conformes.

## Revendications

1. Procédé d'hydrodésulfuration d'au moins une coupe essence mettant en oeuvre un catalyseur comprenant, sous sa forme oxyde,
- une teneur massique de l'élément du groupe VIB exprimée en pourcentage poids d'oxyde par rapport à la masse totale du catalyseur étant comprise entre 1 et 25% poids présent sous forme d'au moins un polyoxométallate choisi parmi les hétéropolyanions de Keggin de formule PCoMo₁₁O₄₀⁶⁻ et PMo₁₂O₄₀³⁻, lesdits polyoxométallates étant piégés dans les parois d'une matrice oxyde silicique mésostructurée appartenant à la famille de matériaux dénommé SBA ayant une taille de pore comprise entre 4 et 50 nm et présentant des parois amorphes d'épaisseur comprise entre 3 et 7 nm, et
- au moins un métal du groupe VIII dont la teneur massique dudit l'élément du groupe VIII exprimée en pourcentage poids d'oxyde par rapport à la masse totale du catalyseur étant comprise entre 0,1 et 10% poids,
- ledit catalyseur étant sulfuré avant d'être mis en oeuvre dans ledit procédé, ledit procédé est mis en oeuvre à une température comprise entre 250°C et 380°C, à une pression totale comprise entre 1 MPa et 3 MPa avec un ratio volume d'hydrogène par volume de charge hydrocarbonée compris entre 100 et 600 litres par litre et à une Vitesse Volumique Horaire (VVH) définie par le rapport du débit volumique de charge hydrocarbonée liquide par le volume de catalyseur chargé dans le réacteur comprise entre 1 et 10 h⁻¹.

2. Procédé selon la revendication 1 dans lequel la coupe essence est issue d'une unité de craquage catalytique.

3. Procédé d'hydrotraitement selon l'une des revendications 1 à 2 dans lequel ledit catalyseur sous sa forme oxyde présente une forme de chacune des particules élémentaires le constituant non sphérique.

4. Procédé selon l'une des revendications 1 à 3 dans lequel ledit catalyseur comprend une teneur massique en phosphore comprise entre 0,1 et 10% poids d'oxyde par rapport au catalyseur final.

## Patentansprüche

1. Verfahren zur Hydrodesulfurierung mindestens einer Benzinfraktion unter Verwendung eines Katalysators, umfassend, in seiner Oxid-Form,
- einen Massengehalt eines Elements der Gruppe VIB, ausgedrückt in Gewichtsprozent des Oxids im Verhältnis zur Gesamtmasse des Katalysators zwischen 1 und 25 Gew.-%, vorhanden in der Form mindestens eine Polyoxometallats, ausgewählt aus Keggin-Heteropolyanionen mit der Formel PCoMo₁₁O₄₀⁶⁻ und PMo₁₂O₄₀³⁻, wobei die Polyoxometallate in den Wänden einer Siliciumdioxid-Mesostrukturmatrix eingeschlossen sind, gehörend zur Familie der als SBA bezeichneten Materialien, mit einer Porengröße zwischen 4 und 50 nm und mit amorphen Wänden mit einer Dicke zwischen 3 und 7 nm, und
- mindestens einem Metall der Gruppe VIII, wobei der Massengehalt des Elements der Gruppe VIII, ausgedrückt in Gewichtsprozent des Oxids im Verhältnis zur Gesamtmasse des Katalysators, zwischen 0,1 und 10 Gew.-% beträgt,
- wobei der Katalysator sulfuriert wird, bevor er in dem Verfahren verwendet wird, wobei das Verfahren bei einer Temperatur zwischen 250°C und 380°C, bei einem Gesamtdruck zwischen 1 MPa und 3 MPa mit einem Verhältnis des Wasserstoffvolumens pro Kohlenwasserstoffcharge zwischen 100 und 600 Liter pro Liter und einer stündlichen Volumengeschwindigkeit (VVH), die durch das Verhältnis des Volumendurchsatzes der flüssigen Kohlenwasserstoffcharge pro Volumen des in den Reaktor geladenen Katalysators definiert wird, zwischen 1 und 10 h⁻¹ durchgeführt wird.

2. Verfahren nach Anspruch 1,
wobei die Benzinfraktion aus einer katalytischen Krack-Einheit stammt.

3. Verfahren zur Hydrobehandlung nach einem der Ansprüche 1 bis 2,
wobei der Katalysator in seiner Oxid-Form eine nichtsphärische Form jedes seiner Elementarteilchen aufweist, die diesen bilden.

4. Verfahren nach einem der Ansprüche 1 bis 3,
wobei der Katalysator einen Massengehalt an Phosphor zwischen 0,1 und 10 Gew.-% des Oxids im Verhältnis zum Endkatalysator umfasst.

## Claims

1. A hydrodesulphuration process of at least one gasoline cut implementing a catalyst comprising, in its oxide form,
- a content by mass of the group VIB element, expressed as wt.% of oxide relative to the total mass of the catalyst, within the range 1 to 25 wt.% present in the form of at least one polyoxometalate selected from the Keggin heteropolyanions of the formula PCMo₁₁O₄₀⁶⁻ and PMo₁₂O₄₀³⁻, the said polyoxometalates being trapped in the walls of a mesostructured silicon oxide matrix belonging to the SBA family of materials having a pore size within the range 4 to 50 nm and having amorphous walls of thickness within the range 3 to 7 nm, and
- at least one metal of the group VIII wherein the content by mass of the group VIII element, expressed as wt.% of oxide relative to the total mass of the catalyst, is within the range 0.1 to 10 wt.%.
- the said catalyst being sulphured before being implemented in the said process, wherein the said process is implemented at a temperature within the range 250°C to 350°C, at a total pressure within the range 1 MPa to 3 MPa with a ratio of the volume of hydrogen to volume of hydrocarbon feed within the range 100 to 600 litres per litre, and at an hourly space velocity (HSV), defined by the ratio of the volumetric flow rate of liquid hydrocarbon feed to the volume of catalyst fed into the reactor, within the range 1 to 10 h⁻¹.

2. A process according to claim 1, wherein the gasoline cut is derived from a catalytic cracking unit.

3. A process according to any one of claims 1 to 2, wherein the said catalyst in its oxide form exhibits a form of each of the elementary particles of which it is composed that is non-spherical.

4. A process according to any one of claims1 to 3, wherein the catalyst comprises a content by mass of phosphorus within the range 0.1 to 10 wt.% of oxide with reference to the final catalyst.
